# EUROPEAN PATENT SPECIFICATION

(11) **EP 3 722 137 B1**
(45) Date of publication and mention of the grant of the patent: **28.01.2026**
(21) Application number: 19167789.7
(22) Date of filing: 08.04.2019
(51) Int. Cl.: B60L 1/00, B60L 58/13, B60L 58/14, B60L 58/20

(54) **CONTROL ELECTRONICS FOR A BATTERY SYSTEM, METHOD FOR POWER SUPPLYING CONTROL ELECTRONICS FOR A BATTERY SYSTEM, BATTERY SYSTEM AND VEHICLE**
STEUERELEKTRONIK FÜR EIN BATTERIESYSTEM, VERFAHREN ZUR STROMVERSORGUNG DER STEUERELEKTRONIK FÜR EIN BATTERIESYSTEM, BATTERIESYSTEM UND FAHRZEUG
ÉLECTRONIQUE DE COMMANDE POUR UN SYSTÈME DE BATTERIE, PROCÉDÉ DE FOURNITURE D'ALIMENTATION À L'ÉLECTRONIQUE DE COMMANDE POUR UN SYSTÈME DE BATTERIE, SYSTÈME DE BATTERIE ET VÉHICULE

(43) Date of publication of application: 14.10.2020
(73) Proprietor: Samsung SDI Co., Ltd., Gyeonggi-do 17084 (KR)
(72) Inventor: Hofer, Maximilian, 8230 Hartberg (AT)
(74) Representative: Gulde & Partner

(56) References cited:
- EP-A1- 3 360 719
- EP-A2- 2 574 494

## Description

### Field of the Invention

The present invention relates to control electronics for a battery system, particularly for a battery system of a vehicle comprising a low voltage battery. The control electronics of the invention are hybrid power supplied control electronics. The present invention further relates to a method for power supplying such control electronics, particularly in a self-supplied manner and in a vehicle. The present invention further relates to a battery system with the control electronics of the invention and to a vehicle with such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises a battery management unit (BMU) and/or a battery management system (BMS). Such control units may be an integral part of the battery system and disposed within a common housing or may be part of a remote control unit communicating with the battery system via a suitable communication bus. In both cases, the control unit communicates with the electrical consumers via a suitable communication bus, e.g. a CAN or SPI interface.

The aforementioned control electronics of a battery system, e.g., a battery system manager, BSM, a BMS, a BMU, or a system basis chip, SBC, can be power supplied by the battery system they are controlling. Advantageously this allows reducing the construction space requirements of the battery system, as an additional power source for the control electronics can be omitted. However, depending on the output voltage of the battery system, e.g. a high voltage battery system, such as e.g., 48 V, regulation of this output voltage may be required.

Further, electronic components of vehicles are usually supplied via an electrical board system operating at voltage of 12 V. The 12 V board net might be related to security relevant functions. Exemplarily, an ECU of a power steering system or an ECU of an antiskid system may be integrated in the 12 V board net. The 12 V board net may comprise a 12 V battery system, such as a lead-acid based 12 V battery, that may be charged by starter generator.

In order to provide compatibility of a battery system's control electronics with the vehicle's electronic components, control electronics may be operated at a voltage near 12 V. Again, if the battery system is providing an output voltage higher than 12 V, such as e.g., 48 V, and is supposed to self-supply the BMS and/or BMU the output voltage must be regulated.

Also during idle periods, i.e., in periods of minimal power consumption, e.g., while parking an electric vehicle, various parameters, such as battery voltages and internal resistances, must be periodically controlled during wake up periods to avoid a system failure, e.g., due to a thermal runaway or short circuits of individual cells. In order to provide a time scale, e.g., for the wake up of the control electronics, e.g., a battery monitoring unit (BMU) and/or a battery management system (BMS), the battery system need to comprise a real time clock (RTC).

The RTC is usually provided as integrated circuit (IC) and may comprise a crystal oscillator or may use the power line frequency for deriving the time scale. The RTC must be continuously energized in order to keep track of running time and may further comprise a volatile or nonvolatile memory in order to keep time related information such as calendar date.

Although, the self-supply of control electronics for a battery system is preferred, particularly in electric cars, the required voltage conversion can significantly amount to energy losses. Particularly during a sleep or idle mode, the energy losses due to voltage conversion can be as high as or higher than the energy losses due to controlling or RTC power consumption.

EP 2 574 494 A2 discloses an automotive power source apparatus that shall more reliably and stably transmit battery voltage signals to the vehicle-side while insuring safety by isolating the driving battery from the vehicle chassis ground but fails to address power consumption during a sleep or idle mode. EP 3 360 719 A1 discloses a battery based dual power supply system without addressing power consumption of a DCDC during sleep mode.

It is thus an object of the present invention to overcome or at least reduce the drawbacks of the prior art and to provide a battery system, particularly control electronics for a battery system, that allow for self supply of a battery system, while reducing the power consumption during idle periods of the battery system and/or sleep mode of the control electronics. At the same time safety measures shall be met and construction space requirements shall be small. Further, a power supply of an RTC shall be ensured during the life time of the battery system.

### Summary of Invention

One or more of the drawbacks of the prior art could be avoided or at least reduced by means of the present invention. In particular, according to a first aspect of the invention control electronics for a battery system are provided in accordance with the appended claims, where the control electronics are specifically configured to be utilized in a vehicle, preferably an electric vehicle, that further comprises a low voltage battery. Therein, the low voltage battery is a common starter battery and the battery system preferably is a high voltage battery system for motor driving of the vehicle. The control electronics are configured for being used with a HV battery system and the low voltage battery by comprising respective power inputs nodes for a high and low voltage, respectively.

The control electronics of the present invention comprise a first DC/DC converter with a first input node that is configured to be connected to the battery system, preferably to a power output node of the battery system, in order to receive a high supply voltage from the battery system. The first DC/DC converter further comprises an output node, particularly a power output node, which is connected to a microcontroller for power supplying the microcontroller. Therein, the microcontroller is also part of the control electronics and is configured for controlling the first DC/DC converter. Preferably, the microcontroller is configured for controlling the conversion ratio, i.e., the ratio between the input voltage and the output voltage, of the first DC/DC converter. Particularly preferred, the first DC/DC converter is a buck converter, a boost converter, or a buck-boost converter and the microcontroller is configured to control the duty cycle of such DC/DC converter. Further preferred, the microcontroller is configured to transmit a first control signal to a switching input of the first DC/DC converter. However, other DC/DC converter types are also preferred, such as e.g., charge pumps or the like. The microcontroller is preferably further configured to perform at least one control function with respect to the battery system, such as e.g., measuring voltages, currents, etc., and performing active and/or passive balancing.

The control electronics further comprise a wake up circuit, which comprises a low voltage sub circuit and a sub circuit on the high voltage side (high voltage sub circuit) that are galvanically isolated from each other. In other words, the low voltage sub circuit and the sub circuit on the high voltage side form a functional unit that is configured to wake up the first DC/DC converter in response to receiving a wake up signal as described in further detail below, while being galvanically isolated from each other. Therein, the galvanic isolation can be realized in a capacitive or an inductive manner. Without restricting the present invention's scope of protection and solely to ease the understanding, solely an inductive galvanic isolation is described in more detail in the following. Further, waking up the first DC/DC converter refers to controlling the first DC/DC converter, preferably the duty cycle of the first DC/DC converter, for a minimal time period that allows the first DC/DC converter to power the microcontroller for a time period that allows the microcontroller to establish control of the first DC/DC controller, preferably of the duty cycle thereof.

The control electronics further comprise a second DC/DC converter that has an input node which is configured to be connected to the low voltage battery, preferably to a power output of the low voltage battery, for receiving a low supply voltage from the low voltage battery. The second DC/DC converter further preferably comprises an output node that is connected to the wake up circuit, preferably to the low voltage sub circuit of the wake up circuit. In other words, the second DC/DC converter is configured to provide its output voltage, i.e., electric energy, to the low voltage sub circuit irrespective of the (high voltage) battery system. The low voltage sub circuit is configured to transmit the electric energy received from the second DC/DC converter, particularly received via a power input of the low voltage sub circuit, to the sub circuit on the high voltage side in response to a received wake-up signal. Therein, the electric energy is transmitted across the galvanic isolation and via a wireless connection using electromagnetic radiation or light. Preferably, the electric energy is transmitted as voltage.

The wake up signal is preferably applied to a signal input of the low voltage sub circuit in order to selectively transmit the energy continuously provided to the low voltage sub circuit to the sub circuit on the high voltage side. Further, in the control electronics of the present invention, the sub circuit on the high voltage side is configured to receive the electric energy from the low voltage sub circuit and to transmit it to the first DC/DC converter. Preferably, the sub circuit on the high voltage side is configured to transmit the electric energy to a switching input of the DC/DC converter for controlling the DC/DC converter. In other words, the wake up circuit, preferably the sub circuit on the high voltage side, is configured for controlling the first DC/DC controller in response to a wake up signal applied to the wake up circuit, preferably to the sub circuit on the high voltage side, at least for a given period.

The control electronics of the invention are thus advantageously configured to be hybrid supplied by a battery system and by LV battery of a vehicle, wherein different subunits of the control electronics are supplied by the battery system and/or the LV battery depending on their function. Therein, particularly the microcontroller of the HV battery system is normally supplied from the battery system via the first DC/DC converter, i.e. not by the LV domain. At the same time a wake up circuit is normally supplied by the LV battery. Further, the first DC/DC converter is configured to operate during a normal mode under the control of the microcontroller, i.e., during an operation mode of the microcontroller. However, as the first DC/DC converter is controlled by the microcontroller it is configured to be switched off during sleep mode of the microcontroller. In the control electronics of the invention, the first DC/DC converter can be started by galvanic energy transfer from the low voltage sub circuit to the sub circuit on the high voltage side of the wake up circuit. Hence, substantially no sleep current is consumed from the battery system and thus power consumption of the microcontroller in sleep mode is zero. The wake up is preferably performed by wake up circuit in response to a wake up signal that is preferably applied from the vehicle, e.g., on starting the ignition of the vehicle. The wake up signal is preferably provided to the wake up circuit via the second DCDC converter, such as e.g., a LDO, or via an RTC of the control electronics.

The control electronics of the present invention thus advantageously solve the challenge of the power supply of a self-supplied battery system during sleep mode. For a battery system according to the prior art, the first DC/DC converter from a high voltage domain of the battery system (e.g., 400 V) is needed to supply the control electronics, which are usually on a lower power domain. Therein, the first DC/DC converter is even available when the low voltage battery of the board net is not available anymore. Therefore, the battery system could operate even without or independent of the low voltage battery, which is mainly needed for startup. However, with such prior art configuration, the first DC/DC converter would have very high power consumption during sleep mode. Further, due to that in sleep mode the current is very low, also the efficiency of the first DC/DC converter would be very low. This problem has been solved before by bypassing the first DC/DC in sleep mode, e.g., via a low dropout regulator, LDO, in order to compensate the very poor efficiency of the first DC/DC converter, e.g., a buck, boost, or buck-boost converter. However, in the case of a 400 V battery system, also the efficiency of a LDO would be very poor. On one hand, the voltage drop over the LDO would be very high and on the other hand, high voltage transistors have to be used, which are expensive. The control electronics of the present invention solves this by supplying the components, which needs to be power supplied also during sleep mode by the low voltage battery of the vehicle via a second DC/DC converter. Due to the low voltage, the power losses in the second DC/DC converter are much less and preferably the second DC/DC converter is a LDO. Further control electronics may be controlled by the low voltage battery, depending whether they are not required to fulfill availability requirements, e.g., to ASIL B.

According to a preferred embodiment of the present invention, the first DC/DC converter is configured to generate a supply voltage for the microcontroller out of an output voltage of the battery system. That is, the microcontroller for controlling the battery system is self-supplied via the battery system. However, as the microcontroller is also configured for controlling the first DC/DC converter, this configuration could not wake up anymore once it is in sleep mode. Hence, an external wake up circuit has to be provided. The microcontroller is preferably configured to provide at least one control function with respect to one or more battery cells of the battery system, while receiving its supply voltage. Particularly preferred, the microcontroller is configured to measure the voltage and/or temperature of at least one battery cell and/or to provide active and/or passive balancing of at least one cell.

In a particularly preferred embodiment of the control electronics, the wake up circuit comprises an isolated DC/DC converter. In other words, the low voltage sub circuit and the sub circuit on the high voltage side form an isolated DC/DC converter, wherein the low voltage sub circuit forms a power input stage and the sub circuit on the high voltage side forms a power output stage of the isolated DC/DC converter. The isolated DC/DC converter is preferably one of a regulated, unregulated, and semi-regulated isolated DC/DC converter. Particularly preferred, the low voltage sub circuit comprises an input stage that is configured to receive an input voltage from the second DC/DC converter and a DC/AC inverter that is configured to receive the input voltage from the input stage and to output an AC voltage to a first electrode of at least one capacitor or to at least one primary winding of a transformer.

Therein, either the capacitor or the transformer realizes the galvanic isolation between the low voltage sub circuit and the sub circuit on the high voltage side. Further, the sub circuit on the high voltage side comprises an AC/DC rectifier that is configured to receive an AC voltage from a second electrode of the at least one capacitor or from at least one secondary winding of the transformer and to output a DC voltage. The sub circuit on the high voltage side further comprises an output stage that is configured to output the DC voltage received from the AC/DC rectifier to the first DC/DC converter, particularly preferred to a switching input of the first DC/DC converter. However, this is just an exemplarily embodiment and other configurations of isolated DC/DC converter as known to the skilled person are also preferred. The embodiment comprising capacitors for galvanic isolation is particularly preferred as it allows a high efficient transfer of energy from the low voltage to the high voltage side.

In a further preferred embodiment of the present invention, the sub circuit on the high voltage side, particularly preferred the output stage thereof, is further configured to generate a PWM signal for controlling the first DC/DC converter from the electric energy received from the low voltage sub circuit, preferably from the DC voltage received from the AC/DC rectifier. In this embodiment, the first DC/DC converter preferably is a buck-, boost-, or buck-boost converter and the PWM signal preferably sets the duty cycle of such converter.

In a further preferred embodiment, the control electronics further comprise a system basis chip, SBC, which is interconnected between the first DC/DC converter and the microcontroller. However, the SBC might also form part of the microcontroller. The SBC is preferably configured to perform at least one of the following functions: voltage regulation, supervision, reset generation, watchdog functions, bus interfaces related functions for e.g., LIN, CAN, SPI, or others, wake up logic functions, and power switching functions.

Preferably, the control electronics further comprise a CAN transceiver that is electrically power supplied via the second DC/DC converter. Particularly preferred, the CAN transceiver is interconnected between the output node of the second DC/DC converter and the wake up circuit, particularly the low voltage sub circuit. In other words, the CAN transceiver is power supplied by the low voltage battery and thus also in sleep mode of the microcontroller. The CAN transceiver is further connected to a CAN bus and configured to perform CAN communication via the CAN bus. Particularly preferred, the CAN transceiver is configured to receive a wake up signal via the CAN bus and, in response thereto, transmit (forward) a wake up signal to the low voltage sub circuit of the wake up circuit. The CAN bus may form part of a vehicle CAN net and hence the CAN transceiver provides the connection between such CAN net and the control electronics. Further preferred, the CAN transceiver is further connected to the microcontroller via a CAN interface, i.e., also provides the connection between such CAN net and the microcontroller. Exemplarily, the microcontroller may thus be informed of the power demands of the vehicle and may e.g. control the power output of the battery system accordingly.

Further preferred, the control electronics also comprise a real time clock, RTC, that is power supplied by the low voltage battery and the second DC/DC converter, i.e., via the second DC/DC converter, and that is connected to the microcontroller via an SPI interface. The real time clock may be provided as an integrated circuit (IC) and may comprise a crystal oscillator or may use a power line frequency for deriving the time scale. The RTC may be connected to the CAN transceiver and/or to the wake up circuit. Further, the RTC may be power supplied via the CAN transceiver and/or to the wake up circuit. Hence, the CAN transceiver may be interconnected between the output node of the second DC/DC converter and the RTC. Further preferred, the RTC is configured to generate a wake up signal and to transmit the wake up signal to the low voltage sub circuit of the wake up circuit. The RTC is power supplied via the second DCDC converter, i.e., also in the sleep mode of the microcontroller. The RTC preferably generates the wake up signal based on its internal time scale.

Another aspect of the present invention relates to a method for power supplying the control electronics according to the appended claims. Therein, the method is preferably carried out for control electronics being installed to a vehicle and being connected to a HV battery system of the vehicle and to a low voltage battery of the vehicle. In other words, in the method of the invention power is preferably supplied to control electronics for (of) a battery system of a vehicle, preferably an electric vehicle, with a low voltage battery, wherein the control electronics comprise a first DC/DC converter with an first input node that is configured to be connected to the battery system and with an output node that is connected to a microcontroller which is configured for controlling the first DC/DC converter; a wake up circuit that comprises a low voltage sub circuit and a sub circuit on the high voltage side that are galvanically isolated from each other; and a second DC/DC converter that has an input node which is configured to be connected to the low voltage battery and an output node connected to the wake up circuit, wherein the low voltage sub circuit is configured to transmit, in response to a received wake-up signal, electric energy received from the second DC/DC converter to the sub circuit on the high voltage side via a wireless connection using electromagnetic radiation or light, and wherein the sub circuit on the high voltage side is configured to receive electric energy from the low voltage sub circuit and transmit it to the first DC/DC converter.

In an active mode of the microcontroller, the method of the present invention comprises at least the steps of supplying the microcontroller with a supply voltage that is generated by the first DC/DC converter out of an output voltage of the battery system, and of controlling the first DC/DC converter via the microcontroller. Preferably, in its active mode the microcontroller further performs at least one control function with respect to the battery system, such as e.g., measurement of voltages, currents and the like, active balancing and/or passive balancing. In other words, during an active mode of the microcontroller the control electronics concerned with the actual operation of the battery system are self-supplied by the battery system.

In a sleep mode of the microcontroller, the method of the present invention comprises at least the steps of supplying the low voltage sub circuit with an input voltage that is generated by the second DC/DC converter out of an output voltage of the low voltage battery. Further, in sleep mode preferably a CAN receiver and an RTC of the low voltage side are power supplied by the low voltage battery and the second DC/DC converter. This step and at least some of the following may be also performed during the active mode of the microcontroller. However, for the present invention, these steps are mainly relevant with respect to the sleep mode of the microcontroller. In the sleep mode of the microcontroller the step further is performed of: transmitting electric energy from the low voltage sub circuit to the sub circuit on the high voltage side in response to a wake-up signal received by low voltage sub circuit. Particularly preferred, the wake-up signal is received from a board net of the vehicle, via a CAN bus of the vehicle, from a CAN transceiver, or from a RTC. Also preferred the wake up signal is received from ignition. The wake up signal is received, if a wake up of the HV battery system is required, e.g., due to an increased power demand of a load of the HV battery system, such as e.g., a motor of the vehicle. Further preferred, a voltage received from the second DC/DC converter is converted to AC, transmitted across the galvanic isolation, and reconverted to DC by the sub circuit on the high voltage side. The DC is preferably outputted to the first DC/DC converter and/or used to generate a control signal for the first DC/DC converter, wherein the control signal is preferably applied to a switching input of the first DC/DC converter. In other words, in the method of the invention and during the sleep mode of the microcontroller further the step occurs of: controlling the first DC/DC converter via the sub circuit on the high voltage side for waking up the microcontroller, i.e., for setting the microcontroller from the sleep mode of the microcontroller to the active mode of the microcontroller as described above.

In a further preferred embodiment of the method of the invention, control electronics comprising a CAN transceiver that is connected to a CAN bus and/or that is connected to the microcontroller via a CAN interface are power supplied by the second DC/DC converter such that the power consumption of the first DC/DC converter for the CAN transceiver is zero. In a further preferred embodiment of the method of the invention, control electronics comprising a real time clock, RTC, connected to the microcontroller via an SPI interface are power supplied by the second DC/DC converter such that the power consumption of the first DC/DC converter for the RTC is zero. Preferably, this preferred embodiment is applied for all further electronic components that are required also during sleep mode of the microcontroller, such that the power consumption of the microcontroller is substantially zero during its sleep mode.

Another aspect of the present invention relates to a battery system that comprises a plurality of battery cells that are connected in series and/or in parallel between a ground node and a voltage supply node. In other words, a voltage corresponding to the added voltage of the battery cells connected in series applies between the ground node and the voltage supply node. The plurality of battery cells may further comprise, a plurality of submodules, each comprising a plurality of cells connected in parallel, connected in series between the ground node and the voltage supply node. The battery system of the invention further comprises control electronics according to the present invention, wherein the first input node of the first DC/DC converter is connected to the voltage supply node.

Particularly preferred, the battery system is for a vehicle and comprises control electronics with a first DC/DC converter with an first input node that is connected to the battery system and with an output node that is connected to a microcontroller, which is configured for controlling the first DC/DC converter; a wake up circuit that comprises a low voltage sub circuit and a sub circuit on the high voltage side that are galvanically isolated from each other; and a second DC/DC converter that has an input node which is configured to be connected to the low voltage battery and an output node connected to the wake up circuit, wherein the low voltage sub circuit is configured to transmit electric energy received from the second DC/DC converter to the sub circuit on the high voltage side in response to a received wake-up signal, and wherein the sub circuit on the high voltage side is configured to receive electric energy from the low voltage sub circuit and transmit it to the first DC/DC converter. In a preferred embodiment of the battery system, the microcontroller is configured to perform at least one control function with respect to at least one of the plurality of battery cells.

Another aspect of the present invention relates a vehicle, comprising a low voltage battery and a battery system according to the present invention, wherein the input node of the second DC/DC converter is connected to the low voltage battery. The vehicle preferably is an electric vehicle or a hybrid vehicle comprising an electric motor power supplied by the battery system for an electric driving mode of the vehicle. Particularly, the vehicle comprises a low voltage battery, a battery system with a plurality of battery cells that are connected in series and/or in parallel between a ground node and a voltage supply node, and control electronics with a first DC/DC converter with an first input node that is connected to the battery system and with an output node that is connected to a microcontroller, which is configured for controlling the first DC/DC converter; a wake up circuit that comprises a low voltage sub circuit and a sub circuit on the high voltage side that are galvanically isolated from each other; and a second DC/DC converter that has an input node which is connected to the low voltage battery and an output node connected to the wake up circuit, wherein the low voltage sub circuit is configured to transmit electric energy received from the second DC/DC converter to the sub circuit on the high voltage side in response to a received wake-up signal, and wherein the sub circuit on the high voltage side is configured to receive electric energy from the low voltage sub circuit and transmit it to the first DC/DC converter.

In a preferred embodiment, the low voltage sub circuit and the sub circuit on the high voltage side are galvanically isolated from each other across a crash interface of the vehicle electrically isolating a high voltage domain and a low voltage domain of the vehicle. The respective domains comprise the respective energy sources, i.e., LV battery and HV battery system, and the respective consumers (loads) operated (supplied) by the respective energy sources. Separating the domains via the crash interface contributes to the operative security of the vehicle and may even be legally required for putting the vehicle to public roads. In this embodiment further the interfaces between the HV domain and the LV domain, i.e., at least the SPI interface and the CAN interface as described above, form part of the crash interface.

Further aspects of the present invention are disclosed in the dependent claims, the appended drawings as well as the following detailed description of the appended drawings.

### Brief Description of the Drawings

Features will become apparent to those of ordinary skill in the art by describing in detail exemplary embodiments with reference to the attached drawings in which:
- Fig. 1: is a schematic illustration of control electronics for a battery system of a vehicle with a low voltage battery according to a first embodiment;
- Fig. 2: is a schematic illustration of control electronics for a battery system of a vehicle with a low voltage battery according to a second embodiment;
- Fig. 3: is a schematic illustration of control electronics for a battery system of a vehicle with a low voltage battery according to a third embodiment;
- Fig. 4: is a schematic illustration of a wake up circuit according to an embodiment; and
- Fig. 5: is a schematic illustration of electronic components of a battery system of a vehicle according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

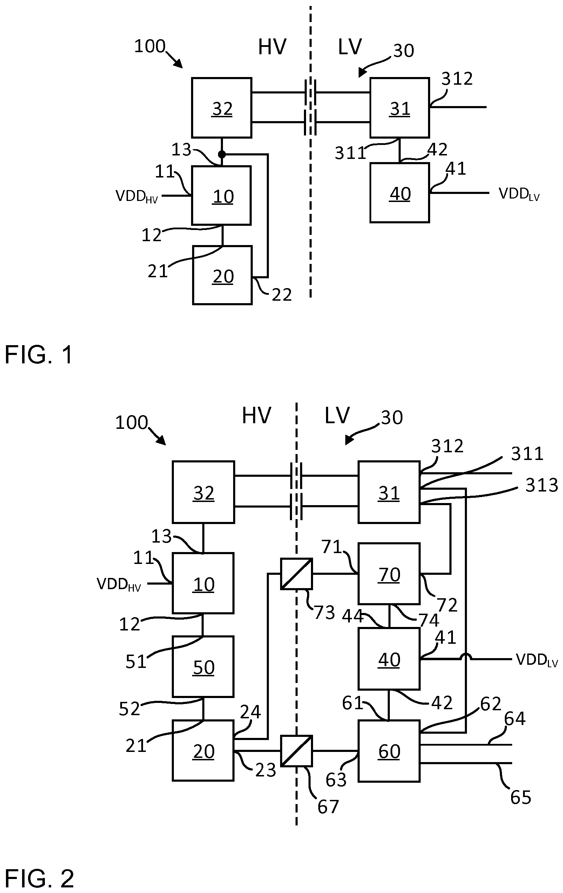

Figure 1 shows a schematic illustration schematic illustration of control electronics 100 for a battery system of a vehicle with a low voltage battery according to a first embodiment. Therein, the control electronics 10 are divided into a high voltage domain HV and into a low voltage domain LV that are separated from each other via a crash interface. The HV domain comprises a buck converter 10 that has an input node 11 which is connected to a battery system's power output for receiving a supply voltage VDD_{HV} of the battery system. The buck converter 10 further comprises a switching input 13 for receiving a PWM control signal to set the duty cycle of the buck converter 10 and an output node 12 for outputting the converted voltage. The output node 12 is connected to an input node 21 of a microcontroller 20 that is configured to output a control signal to the switching input 13 of the buck converter 10 via a control output 22 in order to control the buck converter 10. During an operation mode of the microcontroller 20, it controls the buck converter 10 such that the latter derives the supply voltage for the microcontroller 20 from VDD_{HV} by setting the duty cycle. The microcontroller 20 is further configured to perform at least one control function with respect to the battery system, such as e.g., measuring of voltages or currents and balancing. Hence, the HV domain of the control electronics 100, i.e., microcontroller 20, is self-supplied by the battery system that is controlled by the microcontroller 20 during operation mode.

The LV domain comprises a LDO regulator 40 that comprises an input node 41 that is configured to be connected to a low voltage battery of the vehicle, i.e., the starter battery of the vehicle, in order to receive an output voltage VDD_{LV} from the starter battery. The LDO regulator 40 further comprises an output node 42 for outputting a regulated voltage derived from VDD_{LV} to a power input node 311 of a low voltage sub circuit 31 of a wake up circuit 30.

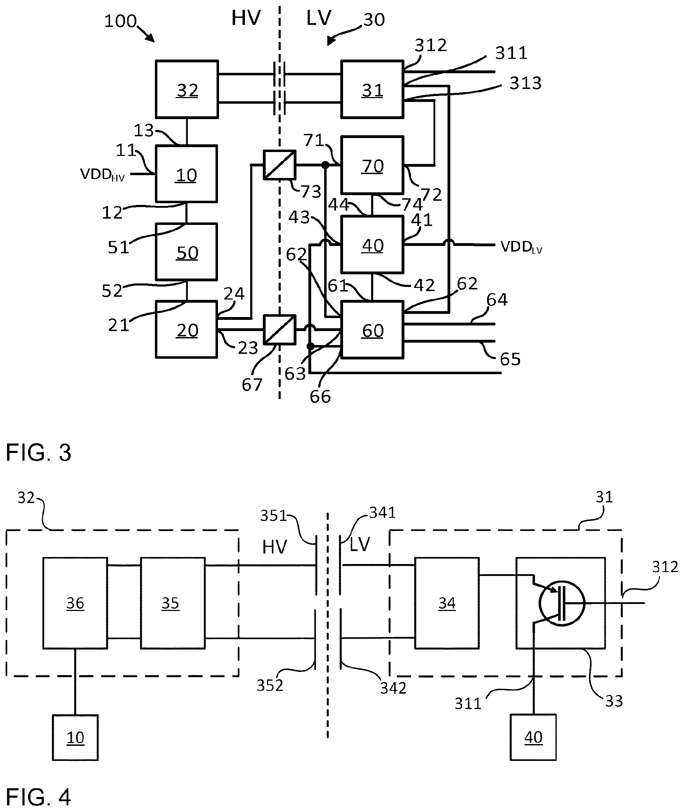

The wake up circuit 30 spans across the crash interface from the low voltage domain to the high voltage domain, wherein the low voltage sub circuit 31 is disposed in the LV domain and wherein a sub circuit on the high voltage side 32 is disposed in the HV domain. The low voltage sub circuit 31 and the sub circuit on the high voltage side 32 are galvanically isolated. The low voltage sub circuit 31 further comprises a signal input that is configured to receive a wake up signal, e.g., from a control unit of the vehicle via a communication bus of the vehicle. A schematic illustration of a wake up circuit 30 is illustrated in Figure 4.

As illustrated in Figure 4, the wake up circuit 30 is configured as an isolated DC/DC converter comprising an input stage 33, a DC/AC inverter 34, an AC/DC rectifier 35, and an output stage 36. Therein, the input stage 33 is configured to receive an input voltage from the second DC/DC converter 40 and the DC/AC inverter 34 is configured to receive the input voltage from the input stage and to output an AC voltage to first electrodes 341, 342 of a first and second capacitor of a transformer. In the sub circuit on the high voltage side 32 the AC/DC rectifier 35 is configured to receive an AC voltage from second electrodes 351, 352 of the first and second capacitor and to output an DC voltage, and an output stage 36 is configured to output the DC voltage received from the AC/DC rectifier to a switching input 13 of the first DC/DC converter 10.

The wake up circuit 30 is configured to receive electric energy from the LDO regulator 40 via the low voltage sub circuit 31 and, in response to a received wake up signal, to transmit the electric energy across the galvanic isolation to the sub circuit on the high voltage side 32. The sub circuit on the high voltage side 32 is further configured to output the received electric energy or a signal derived thereof to the switching input 13 of the buck converter 10. Hence, even if the buck converter 10 is not controlled by the microcontroller 20 in a sleep mode of the microcontroller 20, i.e., in an inactive mode of the buck converter 10, the sub circuit on the high voltage side 32 can control the buck converter 10 to provide the supply voltage of the microcontroller 20 derived from the battery output voltage VDD_{HV} to the input node 21 of the microcontroller 20. In response to receiving the supply power, the microcontroller 20 wakes up and takes over control of buck converter 10 via its control output 22. Hence, a wake up function of the HV domain can be performed solely based on output the LV domain.

Figure 2 is a schematic illustration of control electronics 100 for a battery system of a vehicle with a low voltage battery according to a second embodiment. A description of the second embodiment is omitted as far as it is equal to the first embodiment.

The control electronics 100 of the second embodiment differ from the first embodiment in that the HV domain further comprises a system basis chip 50 interconnected between the buck converter 10 and the microcontroller 20. Particularly, an input node 51 of system basis chip 50 is connected to the output node 12 of the buck converter 10 and an output node 52 of system basis chip 50 is connected to the input node 21 of the microcontroller 20. The control electronics 100 of the second embodiment further differ from the first embodiment in that the LV domain further comprises a CAN transceiver 60 and a real time clock, RTC, 70.

The CAN transceiver 60 comprises a power input 61 that is connected to the output node 42 of the LDO regulator 40 in order to receive a supply voltage thereof. The CAN transceiver 60 further comprises a power output 62 that is connected to a power input 311 of low voltage sub circuit 31 for transmitting electric energy to the low voltage sub circuit 31. The CAN transceiver 60 is further connected to a CAN bus comprising high CAN line 64 and a low CAN line 65 for performing communication with control units of the vehicle or other loads. The CAN transceiver 60 further communicates with the microcontroller 20 via a CAN interface 67 and a first I/O interface 23 of the microcontroller 20. This allows communicating control signals and/or information from the vehicle, e.g., a load request from an electric motor, to the microcontroller 20 for the latter to control the battery system accordingly.

The RTC 70 comprises a first I/O interface 71 and a second I/O interface 72 that are both and individually configured to receive and/or transmit control signals as well as supply power. In an embodiment, the RTC 70 receives its supply power via a power output 313 of the low voltage sub circuit 31. Alternatively, the RTC 70 comprises an input node 74 that is connected to a second output node 44 of the LDO 40, wherein the LDO 40 power supplies the RTC 70. The RTC 70 further communicates with the microcontroller 20 via an SPI interface 73 and a second I/O interface 24 of the microcontroller 20 for providing a clock signal to the microcontroller 20. The control electronics 100 of Figure 2 further differ from that of Figure 1 in that the electric energy is received by the low voltage sub circuit 31 from the LDO regulator 40 via the CAN transceiver 60.

Figure 3 is a schematic illustration of control electronics 100 for a battery system of a vehicle with a low voltage battery according to a third embodiment. A description of the second embodiment is omitted as far as it is equal to the first or second embodiment.

Control electronics 100 of Figure 3 differ from that of Figure 2 in that the CAN transceiver 60 comprises two power outputs 62 and is, via one of these power outputs, also connected to the RTC 70. Hence, the RTC 70 can be power supplied by the CAN transceiver 60 or a power output 313 of the low voltage sub circuit 31. Alternatively, the RTC 70 comprises an input node 74 that is connected to a second output node 44 of the LDO 40, wherein the LDO 40 power supplies the RTC 70, then the output 62 of the CAN transceiver can be used to transmit and or receive signals via SPI interface 73 that is used commonly with the RTC 70. Further, the low voltage sub circuit 31 can also be power supplied redundantly by the CAN transceiver 60 or the RTC 70, such that power output 313 could also be a power input of the low voltage sub circuit 31. Control electronics 100 of Figure 3 further differ from that of Figure 2 in that CAN transceiver 60 is connected to a ground line via a respective ground node 66 and in that LDO regulator 40 is connected to the same ground line via a respective ground node 43. Therein, the ground node can also be utilized for diagnostic purposes, e.g., for controlling the function of the LDO regulator 40 and/the CAN transceiver 60.

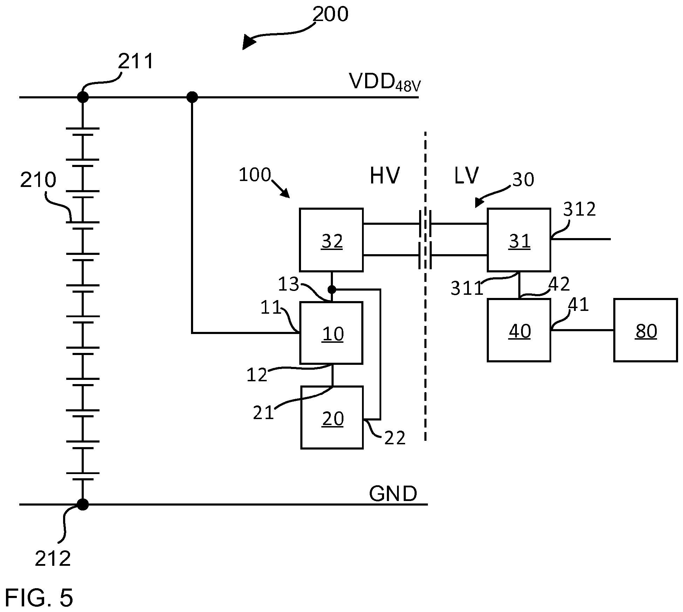

Figure 5 is a schematic illustration of a battery system electronics 200 of a vehicle according to an embodiment, particularly comprising the control electronics 100 for a battery system according to the first embodiment. The battery system electronics 200 comprise a plurality of battery cells 210 electrically connected in series and/or parallel between a first stack node 211 and a second stack node 212. Therein, the first stack node 211 is a power output of the battery system providing a high voltage supply voltage VDD, i.e., 48 V. The second stack node 212 is on ground potential. The input node 11 of the first DCDC converter 10 is connected to the first stack node 211 and receives a 48 V high voltage supply voltage VDD.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 10: first DC/DC converter
- 11: input node
- 12: output node
- 13: switching input
- 20: microcontroller
- 21: input node
- 22: control output
- 23: first I/O interface
- 24: second I/O interface
- 30: wake up circuit
- 31: low voltage sub circuit
- 311: power input node
- 312: signal input node
- 313: power output node
- 32: sub circuit on the high voltage side
- 33: input stage
- 34: DC/AC converter
- 341: first electrode of first capacitor
- 342: first electrode of second capacitor
- 351: second electrode of first capacitor
- 352: second electrode of second capacitor
- 35: ACV/DC rectifier
- 36: output stage
- 40: second DC/DC converter
- 41: input node
- 42: output node
- 43: ground node
- 44: second output node
- 50: system basis chip
- 51: input node
- 52: output node
- 60: CAN transceiver
- 61: power input
- 62: power output
- 63: signal I/O interface
- 64: high CAN
- 65: low CAN
- 66: ground node
- 67: CAN interface
- 70: real time clock
- 71: first I/O interface
- 72: second I/O interface
- 73: SPI interface74 input node
- 80: low voltage battery
- 200: battery system electronics
- 210: battery cell
- 211: first stack node
- 212: second stack node

## Claims

1. Control electronics (100) for a battery system of a vehicle with a low voltage battery, the control electronics (100) comprising:
a first DC/DC converter (10) with an first input node (11) configured to be connected to the battery system and with an output node (12) connected to a microcontroller (20) configured for controlling the first DC/DC converter (10);
a wake up circuit (30) comprising a low voltage sub circuit (31) and a sub circuit (32) on the high voltage side that are galvanically isolated from each other; and
a second DC/DC converter (40) having an input node (41) configured to be connected to the low voltage battery and an output node (42) connected to the wake up circuit (30);
wherein the low voltage sub circuit (31) is configured to transmit, in response to a received wake-up signal, electric energy received from the second DC/DC converter (40) to the sub circuit (32) on the high voltage side via a wireless connection, wherein the electric energy is transmitted across the galvanic isolation and might be transmitted in any form, such as e.g. current, voltage, or light, and
wherein the sub circuit on the high voltage side (32) is configured to receive electric energy from the low voltage sub circuit (31) and to transmit it to the first DC/DC converter (10).

2. Control electronics (100) of claim 1, wherein the microcontroller (20) is further configured to perform at least one control function with respect to the battery system.

3. Control electronics (100) of claim 1 or 2, wherein the first DC/DC converter (10) is configured to generate a supply voltage for the microcontroller (20) out of **an** output voltage VDD_{HV} of the battery system.

4. Control electronics (100) according to any one of the preceding claims, wherein the wake up circuit (30) comprises an isolated DC/DC converter (33,34,35,36).

5. Control electronics (100) according to any one of the preceding claims,
wherein the low voltage sub circuit (31) comprises:
an input stage (33) configured to receive an input voltage from the second DC/DC converter (40), and
a DC/AC inverter (34) configured to receive the input voltage from the input stage and to output an AC voltage to a first electrode (341, 342) of at least one capacitor, and wherein the sub circuit on the high voltage side (32) comprises:
an AC/DC rectifier (35) configured to receive an AC voltage from a second electrode (351, 351) of the at least one capacitor and to output an DC voltage, and
an output stage (36) configured to output the DC voltage received from the AC/DC rectifier to a switching input (13) of the first DC/DC converter (10).

6. Control electronics (100) according to any one of the preceding claims, wherein the sub circuit on the high voltage side (32) is further configured to generate a PWM signal for controlling the first DC/DC converter (10) from the electric energy received from the low voltage sub circuit (31).

7. Control electronics (100) according to any one of the preceding claims, further comprising a system basis chip (50) interconnected between the first DC/DC converter (10) and the microcontroller (20).

8. Control electronics (100) according to any one of the preceding claims, further comprising a CAN transceiver (60) electrically supplied by the output node (42) of the second DC/DC converter (40), connected to a CAN bus (61, 62) and connected to the microcontroller via a CAN interface (67).

9. Control electronics (100) according to any one of the preceding claims, further comprising a real time clock, RTC, (70) power supplied by the second DC/DC converter (40) and connected to the microcontroller via an SPI interface (73).

10. Method for power supplying the control electronics (100) of claim 1, with the steps:
in an active mode of the microcontroller (20):
supplying the microcontroller (20) with a supply voltage generated by the first DC/DC converter (10) out of an output voltage of the battery system, and
controlling the first DC/DC converter (10) via the microcontroller (20),
in a sleep mode of the microcontroller (20):
supplying the low voltage sub circuit (31) with an input voltage generated by the second DC/DC converter (40) out of an output voltage of the low voltage battery;
transmitting, in response to a wake-up signal received by low voltage sub circuit (31), electric energy from the low voltage sub circuit (31) to the sub circuit on the high voltage side (32) via a wireless connection, wherein the electric energy is transmitted across the galvanic isolation and might be transmitted in any form, such as e.g. current, voltage, or light, and
controlling the first DC/DC converter (40) via the sub circuit on the high voltage side (32) for waking up the microcontroller (20).

11. Method according to claim 10 for power supplying the control electronics (100) of claims 8 and/or 9, wherein, in the sleep mode of the microcontroller (20), the CAN transceiver (60) and/or the RTC (70) are power supplied by the second DC/DC converter (40) and the power consumption of the first DC/DC converter (10) is substantially zero.

12. Battery system, comprising:
a plurality of battery cells (210) connected in series and/or in parallel between a ground node (212) and a voltage supply node (211); and
control electronics (100) according to claim 1, wherein the first input node (11) of the first DC/DC converter (10) is connected to the voltage supply node (211).

13. Battery system according to claim 12, wherein the microcontroller (20) is configured to perform at least one control function with respect to at least one of the plurality of battery cells (210).

14. Vehicle, comprising a low voltage battery and a battery system according to claim 12 or 13, wherein the input node (41) of the second DC/DC converter (40) is connected to the low voltage battery (80).

## Patentansprüche

1. Steuerelektronik (100) für ein Batteriesystem eines Fahrzeugs mit einer Niederspannungsbatterie, wobei die Steuerelektronik (100) Folgendes umfasst:
einen ersten DC/DC-Wandler (10) mit einem ersten Eingangsknoten (11), der zum Verbinden mit dem Batteriesystem konfiguriert ist, und mit einem Ausgangsknoten (12), der mit einem Mikrocontroller (20) verbunden ist, der zum Steuern des ersten DC/DC-Wandlers (10) konfiguriert ist;
eine Weckschaltung (30), die eine Niederspannungs-Unterschaltung (31) und eine Unterschaltung auf der Hochspannungsseite (32) umfasst, die galvanisch voneinander getrennt sind; und
einen zweiten DC/DC-Wandler (40) mit einem Eingangsknoten (41), der zum Verbinden mit der Niederspannungsbatterie konfiguriert ist, und einem Ausgangsknoten (42), der mit der Weckschaltung (30) verbunden ist;
wobei die Niederspannungs-Unterschaltung (31) so konfiguriert ist, dass sie als Reaktion auf ein empfangenes Wecksignal elektrische Energie, die von dem zweiten DC/DC-Wandler (40) empfangen wird, über eine drahtlose Verbindung an die Unterschaltung auf der Hochspannungsseite (32) überträgt, wobei die elektrische Energie über die galvanische Trennung übertragen wird und in beliebiger Form übertragen werden kann, wie z.B. als Strom, Spannung oder Licht, und
wobei die Unterschaltung auf der Hochspannungsseite (32) so konfiguriert ist, dass sie elektrische Energie von der Niederspannungs-Unterschaltung (31) empfängt und an den ersten DC/DC-Wandler (10) überträgt.

2. Steuerelektronik (100) nach Anspruch 1, wobei der Mikrocontroller (20) ferner dazu konfiguriert ist, mindestens eine Steuerfunktion in Bezug auf das Batteriesystem auszuführen.

3. Steuerelektronik (100) nach Anspruch 1 oder 2, wobei der erste DC/DC-Wandler (10) dazu konfiguriert ist, aus einer Ausgangsspannung VDD_{HV} des Batteriesystems eine Versorgungsspannung für den Mikrocontroller (20) zu erzeugen.

4. Steuerelektronik (100) nach einem der vorstehenden Ansprüche, wobei die Weckschaltung (30) einen isolierten DC/DC-Wandler (33, 34, 35, 36) umfasst.

5. Steuerelektronik (100) nach einem der vorstehenden Ansprüche,
wobei die Niederspannungs-Unterschaltung (31) Folgendes umfasst:
eine Eingangsstufe (33), die dazu konfiguriert ist, eine Eingangsspannung vom zweiten DC/DC-Wandler (40) zu empfangen, und
einen DC/AC-Wechselrichter (34), der dazu konfiguriert ist, die Eingangsspannung von der Eingangsstufe zu empfangen und eine Wechselspannung an eine erste Elektrode (341, 342) mindestens eines Kondensators auszugeben, und wobei die Unterschaltung auf der Hochspannungsseite (32) Folgendes umfasst:
einen AC/DC-Gleichrichter (35), der dazu konfiguriert ist, eine Wechselspannung von einer zweiten Elektrode (351, 351) des mindestens einen Kondensators zu empfangen und eine Gleichspannung auszugeben, und
eine Ausgangsstufe (36), die dazu konfiguriert ist, die vom AC/DC-Gleichrichter empfangene Gleichspannung an einen Schalteingang (13) des ersten DC/DC-Wandlers (10) auszugeben.

6. Steuerelektronik (100) nach einem der vorstehenden Ansprüche, wobei die Unterschaltung auf der Hochspannungsseite (32) ferner dazu konfiguriert ist, ein PWM-Signal zum Steuern des ersten DC/DC-Wandlers (10) aus der von der Niederspannungs-Unterschaltung (31) empfangenen elektrischen Energie zu erzeugen.

7. Steuerelektronik (100) nach einem der vorstehenden Ansprüche, umfassend ferner einen Systembasis-Chip (50), der zwischen dem ersten DC/DC-Wandler (10) und dem Mikrocontroller (20) geschaltet ist.

8. Steuerelektronik (100) nach einem der vorstehenden Ansprüche, umfassend ferner einen CAN-Transceiver (60), der elektrisch vom Ausgangsknoten (42) des zweiten DC/DC-Wandlers (40) gespeist wird, mit einem CAN-Bus (61, 62) verbunden ist und über eine CAN-Schnittstelle (67) mit dem Mikrocontroller verbunden ist.

9. Steuerelektronik (100) nach einem der vorstehenden Ansprüche, umfassend ferner eine Echtzeituhr (kurz: RTC) (70), die vom zweiten DC/DC-Wandler (40) mit Strom versorgt wird und über eine SPI-Schnittstelle (73) mit dem Mikrocontroller verbunden ist.

10. Verfahren zur Stromversorgung der Steuerelektronik (100) nach Anspruch 1, mit den Schritten: in einem aktiven Modus des Mikrocontrollers (20):
Versorgen des Mikrocontrollers (20) mit einer vom ersten DC/DC-Wandler (10) aus einer Ausgangsspannung des Batteriesystems erzeugten Versorgungsspannung und
Steuern des ersten DC/DC-Wandlers (10) über den Mikrocontroller (20),
in einem Schlafmodus des Mikrocontrollers (20):
Versorgen der Niederspannungs-Unterschaltung (31) mit einer vom zweiten DC/DC-Wandler (40) aus einer Ausgangsspannung der Niederspannungsbatterie erzeugten Eingangsspannung;
Übertragen elektrischer Energie von der Niederspannungs-Unterschaltung (31) zur Unterschaltung auf der Hochspannungsseite (32) über eine drahtlose Verbindung als Reaktion auf ein von der Niederspannungs-Unterschaltung (31) empfangenes Wecksignal, wobei die elektrische Energie über die galvanische Trennung übertragen wird und in beliebiger Form übertragen werden kann, z.B. als Strom, Spannung oder Licht, und
Steuern des ersten DC/DC-Wandlers (40) über die Unterschaltung auf der Hochspannungsseite (32), um den Mikrocontroller (20) zu wecken.

11. Verfahren nach Anspruch 10 zur Stromversorgung der Steuerelektronik (100) nach den Ansprüchen 8 und/oder 9, wobei im Schlafmodus des Mikrocontrollers (20) der CAN-Transceiver (60) und/oder die RTC (70) durch den zweiten DC/DC-Wandler (40) mit Strom versorgt werden und der Stromverbrauch des ersten DC/DC-Wandlers (10) im Wesentlichen null ist.

12. Batteriesystem, umfassend:
mehrere Batteriezellen (210), die in Reihe und/oder parallel zwischen einem Masseknoten (212) und einem Spannungsversorgungsknoten (211) geschaltet sind; und
eine Steuerelektronik (100) nach Anspruch 1, wobei der erste Eingangsknoten (11) des ersten DC/DC-Wandlers (10) mit dem Spannungsversorgungsknoten (211) verbunden ist.

13. Batteriesystem nach Anspruch 12, wobei der Mikrocontroller (20) dazu konfiguriert ist, mindestens eine Steuerfunktion in Bezug auf mindestens eine der mehreren Batteriezellen (210) auszuführen.

14. Fahrzeug, umfassend eine Niederspannungsbatterie und ein Batteriesystem nach Anspruch 12 oder 13, wobei der Eingangsknoten (41) des zweiten DC/DC-Wandlers (40) mit der Niederspannungsbatterie (80) verbunden ist.

## Revendications

1. Électronique de commande (100) pour un système de batterie d'un véhicule avec une batterie basse tension, l'électronique de commande (100) comportant :
un premier convertisseur CC/CC (10) avec un premier nœud d'entrée (11) configuré pour être connecté au système de batterie et avec un nœud de sortie (12) connecté à un microcontrôleur (20) configuré pour commander le premier convertisseur CC/CC (10) ;
un circuit de réveil (30) comportant un sous-circuit basse tension (31) et un sous-circuit (32) du côté haute tension qui sont isolés galvaniquement l'un de l'autre ; et
un second convertisseur CC/CC (40) présentant un nœud d'entrée (41) configuré pour être connecté à la batterie basse tension et un nœud de sortie (42) connecté au circuit de réveil (30) ;
dans laquelle le sous-circuit basse tension (31) est configuré pour transmettre, en réponse à un signal de réveil reçu, de l'énergie électrique reçue du second convertisseur CC/CC (40) au sous-circuit (32) du côté haute tension par l'intermédiaire d'une connexion sans fil, dans laquelle l'énergie électrique est transmise à travers l'isolation galvanique et peut être transmise sous n'importe quelle forme, par exemple sous forme de courant, de tension ou de lumière, et
dans laquelle le sous-circuit du côté haute tension (32) est configuré pour recevoir de l'énergie électrique du sous-circuit basse tension (31) et pour la transmettre au premier convertisseur CC/CC (10).

2. Électronique de commande (100) selon la revendication 1, dans laquelle le microcontrôleur (20) est en outre configuré pour effectuer au moins une fonction de commande par rapport au système de batterie.

3. Électronique de commande (100) selon la revendication 1 ou 2, dans laquelle le premier convertisseur CC/CC (10) est configuré pour générer une tension d'alimentation pour le microcontrôleur (20) à partir d'une tension de sortie VDD_{HV} du système de batterie.

4. Électronique de commande (100) selon l'une quelconque des revendications précédentes, dans laquelle le circuit de réveil (30) comporte un convertisseur CC/CC isolé (33, 34, 35, 36).

5. Électronique de commande (100) selon l'une quelconque des revendications précédentes,
dans laquelle le sous-circuit basse tension (31) comporte :
un étage d'entrée (33) configuré pour recevoir une tension d'entrée du second convertisseur CC/CC (40), et
un onduleur CC/CA (34) configuré pour recevoir la tension d'entrée de l'étage d'entrée et pour émettre une tension CA vers une première électrode (341, 342) d'au moins un condensateur, et
dans laquelle le sous-circuit du côté haute tension (32) comporte :
un redresseur CA/CC (35) configuré pour recevoir une tension CA d'une seconde électrode (351, 351) de l'au moins un condensateur et pour émettre une tension CC, et
un étage de sortie (36) configuré pour émettre la tension CC reçue du redresseur CA/CC vers une entrée de commutation (13) du premier convertisseur CC/CC (10).

6. Électronique de commande (100) selon l'une quelconque des revendications précédentes, dans laquelle le sous-circuit du côté haute tension (32) est en outre configuré pour générer un signal PWM pour commander le premier convertisseur CC/CC (10) à partir de l'énergie électrique reçue du sous-circuit basse tension (31).

7. Électronique de commande (100) selon l'une quelconque des revendications précédentes, comportant en outre une puce de base de système (50) interconnectée entre le premier convertisseur CC/CC (10) et le microcontrôleur (20).

8. Électronique de commande (100) selon l'une quelconque des revendications précédentes, comportant en outre un émetteur-récepteur CAN (60) alimenté électriquement par le nœud de sortie (42) du second convertisseur CC/CC (40), connecté à un bus CAN (61, 62) et connecté au microcontrôleur par l'intermédiaire d'une interface CAN (67).

9. Électronique de commande (100) selon l'une quelconque des revendications précédentes, comportant en outre une horloge temps réel, HTR, (70) alimentée par le second convertisseur CC/CC (40) et connectée au microcontrôleur par l'intermédiaire d'une interface SPI (73).

10. Procédé d'alimentation électrique de l'électronique de commande (100) selon la revendication 1, comprenant les étapes suivantes :
dans un mode actif du microcontrôleur (20) :
l'alimentation du microcontrôleur (20) en une tension d'alimentation générée par le premier convertisseur CC/CC (10) à partir d'une tension de sortie du système de batterie, et
la commande du premier convertisseur CC/CC (10) par l'intermédiaire du microcontrôleur (20), dans un mode veille du microcontrôleur (20) :
l'alimentation du sous-circuit basse tension (31) avec une tension d'entrée générée par le second convertisseur CC/CC (40) à partir d'une tension de sortie de la batterie basse tension ;
la transmission, en réponse à un signal de réveil reçu par le sous-circuit basse tension (31), d'énergie électrique du sous-circuit basse tension (31) au sous-circuit du côté haute tension (32) par l'intermédiaire d'une connexion sans fil, dans lequel l'énergie électrique est transmise à travers l'isolation galvanique et peut être transmise sous n'importe quelle forme, par exemple sous forme de courant, de tension ou de lumière, et
la commande du premier convertisseur CC/CC (40) par l'intermédiaire du sous-circuit du côté haute tension (32) pour réveiller le microcontrôleur (20).

11. Procédé selon la revendication 10 d'alimentation électrique de l'électronique de commande (100) selon les revendications 8 et/ou 9, dans lequel, en mode veille du microcontrôleur (20), l'émetteur-récepteur CAN (60) et/ou la HTR (70) sont alimentés par le second convertisseur CC/CC (40) et la consommation de puissance du premier convertisseur CC/CC (10) est sensiblement nulle.

12. Système de batterie comportant :
une pluralité d'éléments de batterie (210) connectés en série et/ou en parallèle entre un nœud de masse (212) et un nœud d'alimentation en tension (211) ; et
une électronique de commande (100) selon la revendication 1, dans lequel le premier nœud d'entrée (11) du premier convertisseur CC/CC (10) est connecté au nœud d'alimentation en tension (211).

13. Système de batterie selon la revendication 12, dans lequel le microcontrôleur (20) est configuré pour effectuer au moins une fonction de commande par rapport à au moins l'un de la pluralité d'éléments de batterie (210).

14. Véhicule, comportant une batterie basse tension et un système de batterie selon la revendication 12 ou 13, dans lequel le nœud d'entrée (41) du second convertisseur CC/CC (40) est connecté à la batterie basse tension (80).
